# EUROPEAN PATENT APPLICATION

(11) **EP 2 503 262 A2**
(43) Date of publication of application: **26.09.2012**
(21) Application number: 12425011.9
(22) Date of filing: 20.01.2012
(51) Int. Cl.: F24J 3/08

(54) **LOW ENTHALPY VERTICAL GEOTHERMAL PROBE**

(30) Priority: 24.01.2011 IT RM20110025
(71) Applicant: Orienti, Fabrizio, 53028 Torrenieri, Montalcino SI (IT)
(72) Inventor: Orienti, Fabrizio, 53028 Torrenieri, Montalcino SI (IT)
(74) Representative: Iannone, Carlo Luigi

(57) **Abstract**

The present invention concerns una low enthalpy vertical geothermal probe (10), che comprende a pipe (11), comprising a delivery section (11') and a return section (11"), inside which a thermal exchange fluid flows, said pipe (11) being positioned within a tubular shell (12), in its turn positioned in a borehole in the ground, inside which a liquid is present, said tubular shell being open at its top, on which a closing element (13) is provided, watertight arranged on the walls of said tubular shell (12) and provided with an opening (14) for the watertight passage of the delivery section (11') of said pipe (11) and with an opening (15) for the watertight passage of the return section (11") of said pipe (11), and with a further opening (16), provided with a removable cap (17).

## Description

The present invention relates to a low enthalpy vertical geothermal probe.

More specifically, the invention concerns a device of the said kind, i.e. a low enthalpy geothermal heat exchanger that, according to the particular solution proposed according to the present invention, is particularly effective in its function of harvesting heat from underground during the winter and of deliverying heat from underground during summer.

As it is well known, underground, already at layers which are immediately below the surface, i.e. a few meters below the surface, it is possible toh ave constant temperature the whole year long, allowing for exploiting the underground as a thermal reservoir thermal reservoir from which to extract heat during the winter to which to deliver heat during summer.

Exploiting this feature of the underground, a low enthalpy geothermal plant is therefor eable to totally providefor heating in winter and cooling in summer, and allows for the production of hot sanitary water up to 60°C, all by means of the same plant.

According to the prior art, a geothermal plant is constituted by two separate hydraulic circuits: a geothermal probe, arranged in a borehole made in the soil and inside which glycolic water flows; and a heat distribution plant, also for cooling and for hot sanitary water in a place, generally but not necessarily a house, for which the geothermal plant is intended. Between the geothermal probe and the distribution plant a heat exchanger is arranged, allowing for thermal exchange between the fluid flowing inside the geothermal probe on one hand and the fluid flowing respectively inside the heat distribution plant and in that of cooling and for sanirary hot water.

Always according to the prior art, the vertical geothermal probes are heat exchangers, installed vertically in boreholes from 50 to 250m of depth, with holes having a variable diameter depending on the depth and the kind of shape of the geothermal probe. The depth of the boreholes is determined according to the volume of the rooms to heat and the kind of soil. Inside the borehole, it is inserted in depth a pipe having the shape of a U or a helix. The remaining empty space is filled with a ternary mixture of water-concrete-bentonite, to assure a good thermal contact between the tubes and the wall of the borehole. The fluid circulating within the borehole cumulates heat and provides geothermal power to a heat pump sized according to the heating power which is needed and powered by electricity. The electric power for the heat pump must be provided from the outside, it is for this reason that, usually, to the geothermal plant i salso associated a small photovoltaic plant for powering the pump. The energetic result is that with 1 kW of electric power it is possible to obtain 3-4 kW of thermal power.

Nevertheless, the performance coefficient of systems of this kind is still not optimal and solution are studied in order to improve its perfoemance.

In this context is presented the solution according to the present invention, with the aim of providing for an improved geothermal plant, and in particular an improved low enthalpy vertical geothermal probe, presenting an optimal yeld in the extraction of heat from underground during the winter and release of heat to the underground during summer.

This and other results are achieved according to the present invention proposing a low enthalpy vertical geothermal probe and a plant allowing for the maximum of efficiency and therefore of the performance coefficient with the lower possible cost.

The purpose of the present invention is therefore that of realising a low enthalpy vertical geothermal probe and a geothermal plant allowing for overcoming the limits of the solutions according to the prior art and achieving the previously described technical results.

A further aim of the invention is that said geothermal probe and said plant can be made with substantially low costs, as far as both installation costs and management and maintenance costs is concerned.

Not last aim of the invention is that of realising a low enthalpy vertical geothermal probe and a geothermal plant which are substantially simple, safe and reliable.

It is therefore a specific object of the present invention a low enthalpy vertical geothermal probe, provided with a pipe, comprising a delivery section and a return section, inside which a thermal exchange fluid flows, said pipe being positioned within a tubular shell, in its turn positioned in a borehole in the ground, inside which a liquid is present, said tubular shell being open at its top, on which a closing element is provided, watertight arranged on the walls of said tubular shell and provided with an opening for the watertight passage of the delivery section of said pipe and with an opening for the watertight passage of the return section of said pipe, and with a further opening, provided with a removable cap.

Preferably, according to the invention, said pipe is provided with a helical delivery section and a straight return section.

In particular, according to the present invention said thermal exchange fluid flowing inside said pipe is a cooling gas and said probe is directly connected to a refrigerating compressor.

Additionally, always according to the invention, said liquid present inside said tubular shell is a solution of water and an anti-freezing additive, preferably a solution of water and ethylene glycol 40% by weight.

Still according to the invention, said tubular shell and said closing element are made of the same thermal and galvanic insulating material, whereas said pipe is made of a thermal conductive material, said return section of said pipe being preferably coated with a layer of insulating material.

Additionally, always according to the invention said closing element is provided with a tubular housing for the insertion with interference of the top of the walls of said tubular shell, locking means of said tubular shell and an additional opening, provided with a removable cap.

Finally, according to the present invention, inside said tubular shell a ballast can be arranged and preferably, above said ballast, a cap can be arranged being provided on its side surfaces with watertight elements for the walls of said tubular shell.

It is evident the efficacy of the low enthalpy vertical geothermal probe of the present invention, allowing, in cases of installation on plants also made according to the present invention, for removing the heat exchanger and the delivery circuiter of the thermal exchange fluid, since the fluid allowing for storing or releasing heat, respectively in winter and in summer, is directly the refrigerating compressor gas, thus reducing the electric power consumption and increasing the plant performance coefficient, besides reducing the production cost. Such technical solution allows for obtaining temperatures that are much higher (in winter) or much lower (in summer), because of the removal of the heat exchanger and the correspondent losses due to the thermal exchange between fluids inside.

It is also evident the efficacy of he low enthalpy vertical geothermal probe of the present invention in cases where, for example in order to supplement the probe in a already existing plant without making too many modifications in it, it is decided to deliver to the pipe of the probe a thermal exchange fluid and, subsequently, to use the exchanger and the circuiter already present in the plant.

Additionally, the low enthalpy vertical geothermal probe according to the present invention can be applied in any position both inside and outside a site, and its installation depth, varying from a few meters to one hundred meters, and beyond, allows for making the boreholes needed for installation without any need to make specific preliminary geological survey.

The present invention will be described, for illustrative non limitative purposes, according to a preferred embodiments thereof, with reference in particular to the figuress of the enclosed drawings, wherein:
- figure 1 shows a sectioned lateral view of a low enthalpy vertical geothermal probe according to a first embodiment of the present invention,
- figure 2 shows a sectioned lateral view del tubular shell of the geothermal probe of figure 1,
- figure 3 shows a sectioned lateral view of the closing element of the geothermal probe of figure 1,
- figure 4 shows a sectioned plan view of the closing element along line A-A of figure 3, and
- figure 5 shows a sectioned lateral view of the tubular shell of a low enthalpy vertical geothermal probe according to a second embodiment of the present invention.

Making reference to the figures, a low enthalpy vertical geothermal probe according to the present invention, indicated as a whole with the numeral 10, is made of a coil pipe 11, a tubular shell 12, open on the top and provided with a closed bottom 12', arranged for protecting said coil pipe 11, and an upper closing element 13, sealingly matching with said tubular shell 12, more in detail in correspondence of its open top, and provided with openings 14, 15 for the passage of the coil pipe 11 and optionally of an additional opening 16 of inspection and insertionor removal of material (in particular of a liquid that preferably is a solution of water and ethylene glycol) inside the probe 10. All of said openings are provided wit closing caps 17.

More in particular, said coil pipe 11 is preferably made in copper and is composed of an elicoidal portion 11' inside which a fluid flows downwards and of a straight portion 11 ", arranged within the coils of said elicoidal portion 11', inside which a fluid flows upwards. The fluid flowing inside the coil pipe 11 is, according to a particularly preferred embodiment of the present invention, a cooling gas, even if it is possible to use within this pipe also a thermal exchange fluid, as already specified earlier for those cases in which it is desirable to use the vertical geothermal probe according to the present invention in a previously installed geothermal plant according to the prior art and making minimal changes to said plant.

The straight portion 11" of the coil pipe 11 is coated with a pipe 18 made of insulating materiall, in particular polyethylene, to avoid, in summer, an even only partial reabsorption of the heat previously released and, therefore, maintaining a high differential between the gas inlet temperature and the gas outlet temperature.

The tubular shell 12 is made of an insulating material, both thermally and galvanically, and is preferably high density polyethylene (HDPE). Structurally, depending on the installation site and the diameter of the tubular shell, the shell is made of a single piece, or by a plurality of cylindrical portions welded head to head and to which the bottom 12' is welded.

The closing element 13 is made with the same material of the tubular shell 12 and is fixed to the tubular shell 12 itself by means of screws or bayonet.

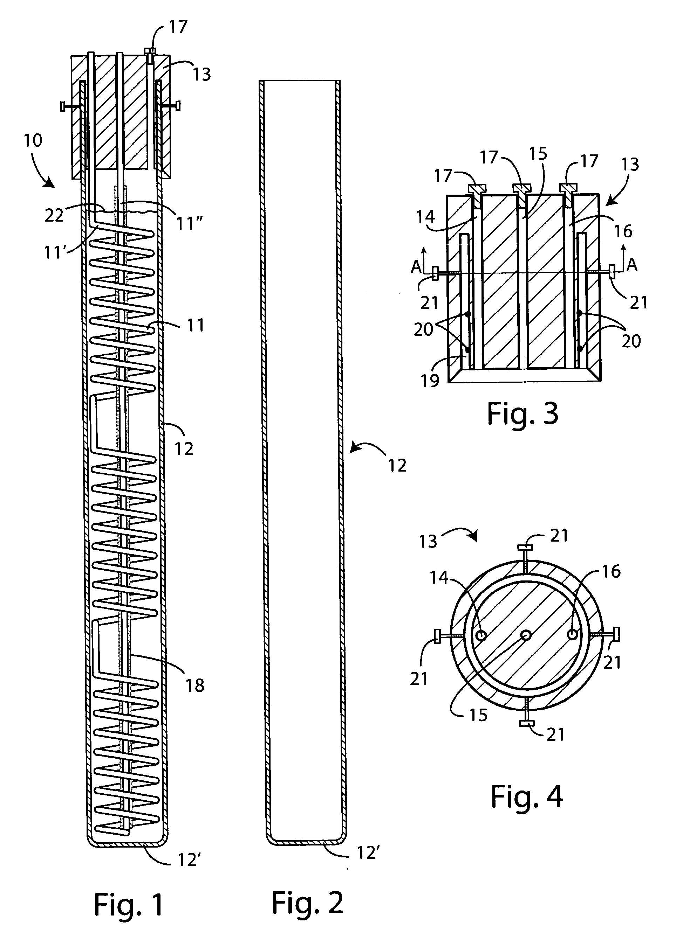

The ends of the two portions 11' and 11" of the coil pipe 11 are passed respectively in the openings 14, 15 for passing the coil pipe 11 and are fixed for example by compression ends (not shown). As already said earlier, the optional additional opening 16 can be used in future for possibleinspections or for the insertion or removal of additional quantities of water - ethylene glycol solution. Therefore, during normal usage, such additional opening 16 is closed by the corresponding cap 17, as shown in particular with reference to figure 1.

The closing element 13 is made with the same material of the tubular shell 12. The shape of the closing element 13 is such to grant the watertight closure on the walls of the tubular shell 12. In particular, with reference to figures 3 and 4, the closing element 13 is provided with a tubular housing 19, shaped so to allow the housing within the top of the walls of the tubular shell 12, in particular with a certain degree of interference between the internal surface of the tubular housing 19 and the internal surface of the top of the walls of the tubular shell 12. The sealing in correspondence of these surfaces is additionally granted by the presence of two sealing rings (o-rings 20), housed in specific seats obtained from the internal surface of the tubular housing 19. The sealinf between the closing element 13 and the tubular shell 12 prevents undesirable leakage of the solution contained inside the probe 10, and in particular prevents part of the solution can disperse by evaporation, spacially in summer. An additional advantage of said sealing is that of preventing possible infiltrations from the soil covering the probe, even if obvious considerations of correct design of the probe would suggest to make a inspection pit for possible future works of ordinary and extraordinary maintenance.

The closing element 13 is additionally provided with a plurality of fixing screws 21, assuring the mechanical fixing of the closing element 13 on the tubular shell 12.

With reference to the installation of the low enthalpy vertical geothermal probe according to the present invention, it is made as follows: after digging the borehole for the probe 10, the tubular shell 12 is put in the borehole, progressively adding inside it water or another suitable liquid, in order to ease the insertion due to the weight and therefore exploiting the force of gravity, without anyway the need of making use of ballasts, which are always applied in specific cases when it is required, for example when inside the borehole is present water. In fact, in the latter case, since the tubular shell is made of plastic material, even if it is filled with water it will tend to float. Also in such a case, anyway, the ballasts according to the prior art present different drawbacks, because they must be applied on the exterior of the tubular shell, implying the possibility they can be catched and can not be found.

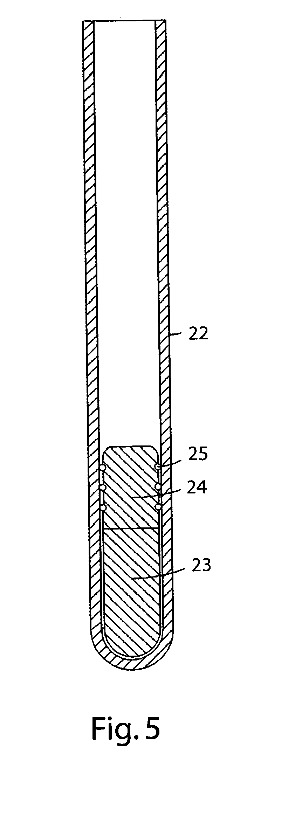

In order to overcome also this technical problem, with reference to figura 5, it is proposed, according to the present invention, a tubular shell 22 provied with an internal ballast 23, which, in function of the needs of weight can vary in length and/or material. To prevents the contact of the ballast 23 with water or other liquid inside the tubular shell 22, above the ballast 23 is arranged a cap 24, made in plastic material or other suitable material, on the external surface of which sealing elements are applied, represented by three o-ring 25.

When the tubular shell 12 is installed for all of its length its position is fixed by introducing in the interspace between the wall of the borehole and the external surface of the tubular shell 12 sand or concrete mixed with bentonite.

When the tubular shell 12 is suitably fixed in its position of use, the coil pipe 11 is introduced in it and then in the water previously poured in the tubular shell is added an antifreeze, in particular ethylene glycol, and possibly other water. The preferred amount of ethylene glycol in solution in water is 40% by weight. The function of this addition is that of preventing water can freeze in winter.

The optimal level 22 of the solution of water and ethylene glycol within the probe 10 is not that of completly filling the tubular shell 12, but rather it is preferred to maintain such level 22 about 20 or 30 cm below the top of the tubular shell 12, i.e. below the closing element 13 of the probe 10 that will be added subsequently. In this way, the air above the liquid surface 22 allows for a better coibentation towards the exterior and allows for absorbing the dilatations of the liquid in the functioning due to temperature change within the probe 10.

When the previous operations end, the closing element 13 is inserted on the tubular shell 12 and is fixed thereof by fixing screws 21 or by means of other suitable fixing devices (for example a bayonet).

The already described operations of installation are repeated for each geothermal probes 10 needed for the plant, after the connection of the different probes 10 and of the probes with the rest of the geothermal plant (a refrigerating compressor or a heat pump or heat exchanger depending on the probes 10 being connected to a specifically made plant or to an already existing plant modified only by the addition of the probes) is completed. The preferred connection of the probes 10 is in parallel, because it allows for a more homogeneous distribution of each single probe 10 without intervening with gas control valves. In fact, by connecting the probes 10 in parallel to each other, each probe 10 offer the same resistance to the fluid flowing within the respective coil pipes 11, allowing for a perfectly identical distribution and allowing for the optimal workong of all the probes 10.

The advantages of the low enthalpy vertical geothermal probe according to the present invention will be immediately evident for a person skilled in the art. In particular, the proposed solution allows for making a plant allowing the maximum of efficiency with the lower possible costs. Moreover the making of the plant according to the proposed solution prevents possible drawbacks due to gas leakages and subsequently the need for maintenance or substitution of components of the plant.

Additionally, the solution implying the use of an internal ballast makes much easier the positioning of the probe, removing the problem of the possible stranding of the ballast in the borehole during positioning. Subsequently, the application of this technical solution allows for making holes in the ground having a lower diameter then usual, reducing the necessary distances required for the positioning of probes according to the prior art.

The present invention was described for illustrative, non limitative purposes, according to preferred embodiments, but it is to be understood that changes and/or modifications can be made by the skilled in the art without escaping the relative scope of protection, asdefined by the enclosed claims.

## Claims

1. Low enthalpy vertical geothermal probe (10), **characterised in that** it comprises a pipe (11), comprising a delivery section (11') and a return section (11"), inside which a thermal exchange fluid flows, said pipe (11) being positioned within a tubular shell (12, 22), in its turn positioned in a borehole in the ground, inside which a liquid is present, said tubular shell being open at its top, on which a closing element (13) is provided, watertight arranged on the walls of said tubular shell (12, 22) and provided with an opening (14) for the watertight passage of the delivery section (11) of said pipe (11) and with an opening (15) for the watertight passage of the return section (11") of said pipe (11), and with a further opening (16), provided with a removable cap (17).

2. Low enthalpy vertical geothermal probe (10) according to claim 1, **characterised in that** said pipe (11) is provided with a helical delivery section (11') and a straight return section (11").

3. Low enthalpy vertical geothermal probe (10) according to claim 1 or 2, **characterised in that** said thermal exchange fluid flowing inside said pipe (11) is a cooling gas.

4. Low enthalpy vertical geothermal probe (10) according to claim 3, **characterised in that** it is directly connected to a refrigerating compressor.

5. Low enthalpy vertical geothermal probe (10) according to any of the previous claims, **characterised in that** said liquid present inside said tubular shell (12, 22) is a solution of water and an anti-freezing additive.

6. Low enthalpy vertical geothermal probe (10) according to claim 5, **characterised in that** said liquid present inside said tubular shell (12, 22) is a solution of water and ethylene glycol 40% by weight.

7. Low enthalpy vertical geothermal probe (10) according to any of the previous claims, **characterised in that** said tubular shell (12, 22) and said closing element (13) are made of the same thermal and galvanic insulating material.

8. Low enthalpy vertical geothermal probe (10) according to any of the previous claims, **characterised in that** said pipe (11) is made of a thermal conductive material.

9. Low enthalpy vertical geothermal probe (10) according to any of the previous claims, **characterised in that** said return section (11") of said pipe (11) is coated with a layer (18) of insulating material.

10. Low enthalpy vertical geothermal probe (10) according to any of the previous claims, **characterised in that** said closing element (13) is provided with a tubular housing (19) for the insertion with interference of the top of the walls of said tubular shell (12, 22).

11. Low enthalpy vertical geothermal probe (10) according to any of the previous claims, **characterised in that** said closing element (13) is provided with locking means (21) of said tubular shell (12, 22).

12. Low enthalpy vertical geothermal probe (10) according to any of the previous claims, **characterised in that** within said tubular shell (22) is housed a ballast (23).

13. Low enthalpy vertical geothermal probe (10) according to claim 12, **characterised in that**, within said tubular shell (22), above said ballast (23), a cap (24) is positioned which is provided on its lateral surfaces with sealing elements with the walls of said tubular shell (22).
